(19) Europäisches Patentamt
European Patent Office
Office européen des brevets

(11) Numéro de publication : 0 277 887 B1

(12) # FASCICULE DE BREVET EUROPEEN

(45) Date de publication du fascicule du brevet : 24.04.91 Bulletin 91/17

(51) Int. Cl.$^5$ : **C08G 73/12,** C08G 59/56

(21) Numéro de dépôt : 88420004.9

(22) Date de dépôt : 05.01.88

(54) **Compositions polymères thermodurcissables présentant des groupements imide et époxyde.**

(30) Priorité : 09.01.87 FR 8700299

(43) Date de publication de la demande : 10.08.88 Bulletin 88/32

(45) Mention de la délivrance du brevet : 24.04.91 Bulletin 91/17

(84) Etats contractants désignés : AT BE CH DE ES FR GB IT LI LU NL SE

(56) Documents cités :
FR-A- 956 605
FR-A- 2 165 722
FR-A- 2 201 313
FR-A- 2 542 752
US-A- 4 421 907

(73) Titulaire : RHONE-POULENC CHIMIE
25, quai Paul Doumer
F-92408 Courbevoie Cédex (FR)

(72) Inventeur : Arpin, René
29, rue du Commandant-Faurax
F-69006 Lyon (FR)

(74) Mandataire : Trolliet, Maurice et al
RHONE-POULENC INTERSERVICES Service Brevets Chimie Centre de Recherches des Carrières B.P. 62
F-69192 Saint-Fons Cédex (FR)

EP 0 277 887 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

La présente invention a pour objet des compositions polymères thermodurcissables à base de groupements imide et époxy.

On sait (cf. brevet français 1.555.564) que l'on peut obtenir des compositions thermodurcissables en faisant réagir un N,N'-bis-imide d'acide dicarboxylique non saturé avec une diamine biprimaire. Le prépolymère obtenu peut être utilisé à l'état de solution, de suspension, de poudre ou bien être conformé encore par simple coulée à chaud. Dans un second stade, on peut provoquer le durcissement du prépolymère par chauffage jusqu'à des températures de l'ordre de 300°C, éventuellement sous pression.

Ces polymères peuvent être convertis en films ou en matériaux multicellulaires. Ils sont d'un intérêt tout particulier pour la préparation d'objects moulés éventuellement en association avec des charges fibreuses ou pulvérulentes et de stratifiés à base de fibres minérales (fibres simples, tissu ou non-tissé de fibres) telles que par exemples des fibres de carbone, de bore ou de verre.

Il a maintenant été trouvé que l'on peut obtenir des compositions thermodurcissables à base de groupements imide conduisant à des résines durcies douées d'une excellente stabilité thermique et qui présentent par exemple, comparativement avec ce qui se passe avec les résines durcies conformes au brevet français précité :

– quand elles son converties en objets moulés, une résistance au choc améliorée, et

– quand elles sont converties en stratifiés, une résistance interlamellaire améliorée.

Plus précisément la présente invention concerne des compositions thermodurcissables caractérisées en ce qu'elles comprennent le produit de réaction entre 90°C et 200°C d'un N,N'-bis-imide, d'une diamine biprimaire et d'une résine époxy, ladite réaction étant définie par les points suivant :

(a) le N,N'-bis-imide est un produit de formule :

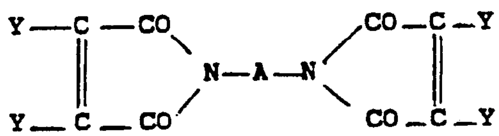

(I)

dans laquelle :

- le symbole Y représente H, $CH_3$ ou Cl
- le symbole A représente un radical divalent choisi dans le groupe constitué par les radicaux : cyclohexylènes ; phénylènes ; méthyl-4 phénylène-1,3 ; méthyl-2 phénylène-1,3 ; méthyl-5 phénylène-1,3 ; diéthyl-2,5 méthyl-3 phénylène-1,4 ; et les radicaux de formule :

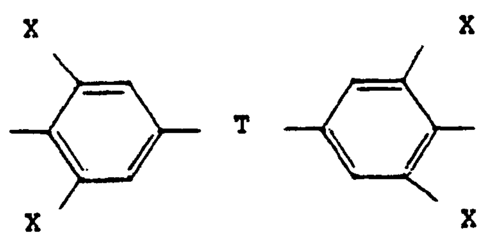

dans laquelle T représente un lien valentiel simple ou un groupement :

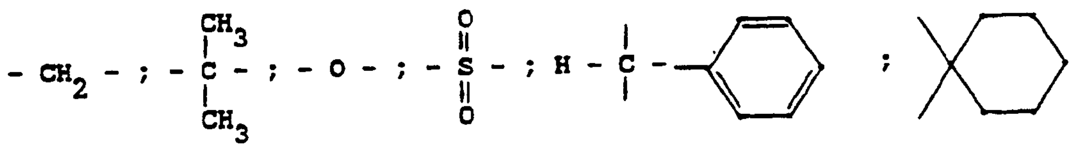

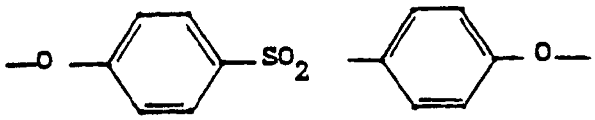

et les symboles X identiques ou différents représentent chacun un atome d'hydrogène, un radical méthyle, éthyle ou isopropyle ;

(b) la diamine biprimaire est un produit de formule :

$$H_2N\text{-}B\text{-}NH_2 \quad (II)$$

dans laquelle le symbole B représente l'un des radicaux divalents que représente le symbole A, les symboles A et B contenus dans un même polymère pouvant être identiques ou différents entre eux ;

(c) la résine époxy possède un poids d'équivalent époxy compris entre 100 et 500, et elle consiste dans un éther glycidique obtenu en faisant réagir avec de l'épichlorhydrine un phénol divalent choisi dans le groupe formé par :
le bis (hydroxy-4 phényl)-2,2 propane, le bis(hydroxy-4 phényl) méthane,le bis(hydroxy-4 phényl) méthylphényl-méthane, les bis(hydroxy-4 phényl)tolyl-méthanes, le résorcinol, l'hydroquinone, le pyrocatéchol, le dihydroxy-4,4' diphényle ; les produits de condensation des phénols précités avec un aldéhyde ; et les dérivés chlorés ou bromés sur les noyaux aromatiques issus des phénols précités ;

(d) la quantité de N,N'-bis-imide de formule (I) et de diamine de formule (II) est choisie de façon à ce que le rapport :

$$\frac{\text{nombre de mole de bis–imide}}{\text{nombre de mole de diamine}}$$

se situe dans l'intervalle allant de 1,2/1 à 20/1 ; la quantité de résine époxy représente 10% à 40% du poids du mélange global bis-imide + diamine + résine époxy ; et, dans le cas où l'on fait appel à une résine époxy chlorée ou bromée, la quantité de chlore ou de brome apportée par la résine époxy, exprimée par le pourcentage en poids de chlore élémentaire ou de brome élémentaire par rapport au poids du mélange global bis-imide + diamine + résine époxy, représente au plus 6% ;

(e) la mise en oeuvre de la réaction est réalisée selon un procédé de préparation en continu consistant à introduire isolément le N,N'-bis-imide de formule (I) à l'état solide divisé, la diamine de formule (II) à l'état fondu et la résine époxy à l'état liquide dans un malaxeur à vis extrudeuse.

Il doit être entendu que l'on peut utiliser un bis-imide ou bien un mélange de plusieurs bis-imides. De même, il va de soi que par les termes de polyamine et de résine époxy, on entend également désigner des mélanges de polyamines et des mélanges de résines époxy.

Vis à vis des polymères obtenus selon le brevet français 1 555 564, les compositions thermodurcissables selon la présente invention se distinguent aussi par une teneur en diamine biprimaire libre qui est très nettement abaissée. Cet abaissement de la teneur en diamine libre est appréciable car il s'agit là de composés dont certains peuvent présenter une certaine toxicité.

A titre d'exemple spécifiques de bis-imides de formule (I), on peut citer en particulier :

- le N,N'-métaphénylène-bis-maléimide,
- le N,N'-paraphénylène-bis-maléimide,
- le N,N'-4,4'-diphénylméthane-bis-maléimide,
- le N,N'-4,4'-diphényléther-bis-maléimide,
- le N,N'-4,4'-diphénylsulphone-bis-maléimide,
- le N,N'-cyclohexylène-1,4-bis-maléimide,

– le N,N'-4,4'-diphényl-1,1 cyclohexane-bis-maléimide,
– le N,N'-4,4'-diphényl-2,2 propane-bis-maléimide,
– le N,N'-4,4'-triphénylméthane-bis-maléimide,
– le N,N'-méthyl-2 phénylène-1,3-bis-maléimide,
– le N,N'-méthyl-4 phénylène-1,3-bis-maléimide,
– le N,N'-méthyl-5 phénylène-1,3-bis-maléimide.

Ces bis-maléimides peuvent être préparés selon les procédés décrits dans le brevet américain n° 3 018 290 et le brevet anglais n° 1 137 290. On utilise de préférence, pour la mise en oeuvre de la présente invention, le N,N'-4,4'-diphénylméthane-bis-maléimide pris seul ou en mélange avec le N,N'-méthyl-2 phénylène-1,3-bis-maléimide, le N,N'-méthyl-4 phénylène-1,3-bis-maléimide et/ou le N,N'-méthyl-5 phénylène-1,3-bis-maléimide.

A titre d'exemples spécifiques de diamines de formule (II), on peut citer en particulier :
– la paraphénylènediamine,
– la métaphénylènediamine,
– le diamino-4,4' diphénylméthane,
– le bis(amino-4 phényl -2,2 propane,
– l'oxyde de bis-(amino-4 phényl),
– la diamino-4,4' diphénylsulfone.

On utilise de préférence pour la mise en oeuvre de la présente invention le diamino-4,4' diphénylméthane.

S'agissant de la résine époxy, l'expression "poids d'équivalent époxy", qui apparaît ci-avant, peut-être définie comme le poids de résine (en gramme) renfermant une fonction époxy

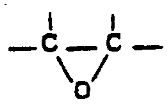

On choisit de préférence une résine époxy possédant un poids d'équivalent époxy compris entre 150 et 300. Quant aux caractéristiques physiques de cette résine, elles vont de celles des résines liquides de faible viscosité (environ $2.10^{-3}$ Pa.s à 25°C) jusqu'à celles de résines pâteuses dont le point de fusion est de l'ordre de 60°C. On utilise tout préférentiellement dans l'invention les éthers glycidiques de bis(hydroxyphényl)alcanes mentionnés ci-avant au point (c), les éthers glycidiques de bis(hydroxyphényl) alcanes bromés sur les noyaux aromatiques et des mélanges de pareilles résines époxy.

Les quantités de N,N'-bis-imide de formule (I), de diamine de formule (II) et de résine époxy sont choisies de préférence de façon à ce que :

– le rapport : $\frac{\text{nombre de mole de bis–imide}}{\text{nombre de moles de diamine}}$ se situe dans l'intervalle allant de 2/1 à 4/1,

– et le poids de résine époxy représente 15% à 30% du poids du mélange global bis-imide + diamine + résine époxy.

Il peut être avantageux de faire appel à une résine époxy chlorée ou bromée, cette dernière étant prise seule ou en mélange avec une résine époxy non chlorée ou non bromée, quand on souhaite préparer des compositions thermodurcissables conduisant à des résines durcies présentant la propriété supplémentaire d'être parfaitement ignifugées. Dans ce cadre, on a constaté de façon inattendue que la quantité de chlore ou de brome apportée dans la composition thermodurcissable selon l'invention par la résine époxy ou le mélange de résines époxy présente un caractère critique vis à vis de certaines propriétés des résines durcies obtenues, notamment les propriétés en matière de stabilité thermique et celles en matière d'adhérence de la résine à groupements imide et époxy sur des métaux tel que par exemple le cuivre. Plus précisément, cette quantité de chlore ou de brome apportée par la résine époxy ou le mélange de résines époxy engagé, exprimée par le pourcentage en poids de chlore élémentaire ou de brome élémentaire par rapport au poids du mélange global bis-imide + diamine + résine(s) époxy, représente comme indiqué ci-avant au plus 6% et elle se situe de préférence dans l'intervalle allant de 2 à 4%. On peut ajuster aisément la quantité de chlore ou de brome à la valeur souhaitée en mettant en oeuvre des résines époxy (utilisées en quantités représentant 10 à 40% et de préférence 15 à 30% de la composition globale) ayant une teneur en chlore ou en brome plus ou moins importante et/ou partant de mélanges de résines époxy chlorées ou bromées avec des résines époxy non chlorées ou non bromées.

Par l'expression "malaxeur à vis extrudeuse" qui apparaît ci-avant au point (e), on entend désigner un appareil qui ne présente pas de zone morte lors de la progression de la matière. Des appareils de ce genre qui peuvent comporter une ou plusieurs vis son décrits dans l'ouvrage de E.G. FISHER-Extrusion of plastics (Interscience Publisher 1964) pages 104 à 108. Ces malaxeurs peuvent comporter deux vis sans fin s'engrenant intimement l'une dans l'autre et tournant dans le même sens ; un appareil de ce type équipé plus particulièrement pour la préparation de téréphtalates alcalins est décrit dans le brevet français 1 462 935. Une autre variété de malaxeurs utilisables est constituée par les appareils comportant une vis sans fin à filetage interrompu effectuant simultanément un mouvement de rotation et un mouvement oscillatoire dans la direction de l'axe, logée dans une enveloppe comportant des dents qui coopèrent avec les ailettes interrompues de la vis. Des appareils de ce type sont décrits dans les brevets français 1 184 392, 1 184 393, 1 307 106 et 1 369 283.

Pour des raisons de commodité de mise en oeuvre, on préfère employer le bis-imide (a) sous la forme de particules dont les dimensions von de 0,1 à 5 mm. Leur introduction dans le malaxeur peut être réglée par les dispositifs connus pour cet usage, tels que vis ou balances doseuses.

La diamine (b) est alimentée à l'état liquide dans la zone de malaxage. Son introduction peut être effectuée au moyen d'une pompe doseuse. L'alimentation de la diamine peut être effectuée en un ou plusieurs points localisés de préférence en aval de la zone d'alimentation du bis-imide (a).

La résine époxy (c) est introduite dans le malaxeur à l'état liquide également en un ou plusieurs points localisés en aval de la zone d'alimentation de la diamine (b).

Le maintien de la zone de malaxage à la température choisie comprise entre 90°C et 200°C et, de préférence, entre 130°C et 180°C est généralement obtenu par chauffage contrôlé de l'enveloppe du malaxeur utilisé. En outre, il est également possible d'effectuer un chauffage contrôlé de la vis ou des vis sans fin de l'appareil. En ce qui concerne l'enveloppe, le chauffage peut être exercé de manière uniforme sur toute sa longueur mais on peut également disposer plusieurs zones de chauffage contiguës assurant à la zone de la malaxage une température par exemple croissante dans le sens de progression de la matière. En amont du premier point d'introduction de la diamine (b), on préfère que la température soit située dans l'intervalle 20-130°C.

Le temps de séjour des produits dans la zone de malaxage peut varier dans une certaine mesure en fonction du bis-imide, de la diamine et de la résine époxy engagés, de la température adoptée et du rapport pondéral des réactifs mis en oeuvre. D'une manière générale, il est de l'ordre de 1 à 30 minutes. A la sortie du malaxeur, il est possible de régler le point de ramollissement de la composition thermodurcissable obtenue par chauffage de cette dernière dans un four dans des conditions de température et durée déterminées. Ce point de ramollissement se situe en général dans l'intervalle de 60°C à 130°C.

Les compositions thermodurcissables selon l'invention peuvent être utilisées telles quelles. Elles peuvent également renfermer des charges fibreuses ou pulvérulentes. A titre d'exemples de telles charges, on peut citer les fibres d'amiante ou de verre, le mica, la silice, l'alumine, les particules métalliques, les silicates d'aluminium, magnésium, zirconium, le carbonate de calcium, les particules de polymères synthétiques tel que le polytétrafluoroéthylène ou les copolymères fluorés.

Ces compositions à l'état liquide ou sous forme de poudre obtenue après refroidissement et broyage de la composition peuvent être utilisées pour la réalisation d'objets moulés (moulage à chaud ou moulage par compression selon l'état physique de la composition). Elles peuvent également être mises en oeuvre en solution par exemple pour la réalisation de matériaux stratifiés, dont le squelette peut être à base de fibres minérales, végétales ou synthétiques, ces stratifiés pouvant servir par exemple de supports de circuits imprimés.

Ces compositions peuvent être durcies par chauffage à une température généralement comprise entre 160°C et 280°C et, de préférence, entre 180°C et 250°C. Elles peuvent avantageusement subir un post-cuisson à une température pouvant atteindre 300°C.

Les exemples suivants, donnés à titre non limitatif, illustrent l'invention et montrent comment elle peut être mise en pratique.

## EXEMPLE 1

L'appareillage utilisé est un malaxeur de laboratoire BUSS connu sous l'appellation "KO-Malaxeur" type PR 46. Ce malaxeur comprend une vis sans fin formée d'un arbre comportant des filets hélicoïdaux interrompus, les interruptions formant des ailettes séparées ; elle est entraînée par un mécanisme approprié. La vis est logée dans un corps comprenant trois enveloppes cylindriques coaxiales contiguës à double paroi ; la paroi interne du corps de malaxage comporte des saillies en forme de dents. La vis est soumise à un mouvement de rotation et simultanément à un mouvement oscillatoire dans la direction de son axe, ce qui crée un échange de matière dans deux directions.

Dans la première enveloppe, on fait circuler de l'eau à 20°C et dans les eux autres, un fluide chauffé à 160°C. La vitesse de rotation de la vis est de 40 tours/minutes.

Dans la première partie du malaxeur (correspondant à la première enveloppe), on introduit du N,N'-4,4'-diphénylméthane-bis-maléimide par l'intermédiaire d'une balance doseuse à raison de 1253 g/h ; le bis-maléi-

mide est introduit à l'état de grains dont la dimension moyenne est de l'ordre de 0,25 mm.

Dans la seconde partie du malaxeur (correspondant à la seconde enveloppe), on introuidt du diamino-4,4' diphénylmétane maintenu à 110°C, à raison de 247 g/h.

Dans la troisième partie du malaxeur (correspondant à la troisième enveloppe), on introduit la résine époxy maintenue à 100°C, à raison de 500 g/h. La résine époxy mise en oeuvre est un éther glycidique obtenu en faisant réagir avec de l'épichlorhydrine du bis (hydroxy-4 phényl)-2,2 propane (ou bisphénol A) et ayant un poids d'équivalent époxy de 188 ; sa viscosité à 25°C est de 10,5 Pa.s ; elle est disponible dans le commerce sous la marque déposée ARALDITE de la Société CBA, type LY 556. Elle peut être représentée par la formule moyenne :

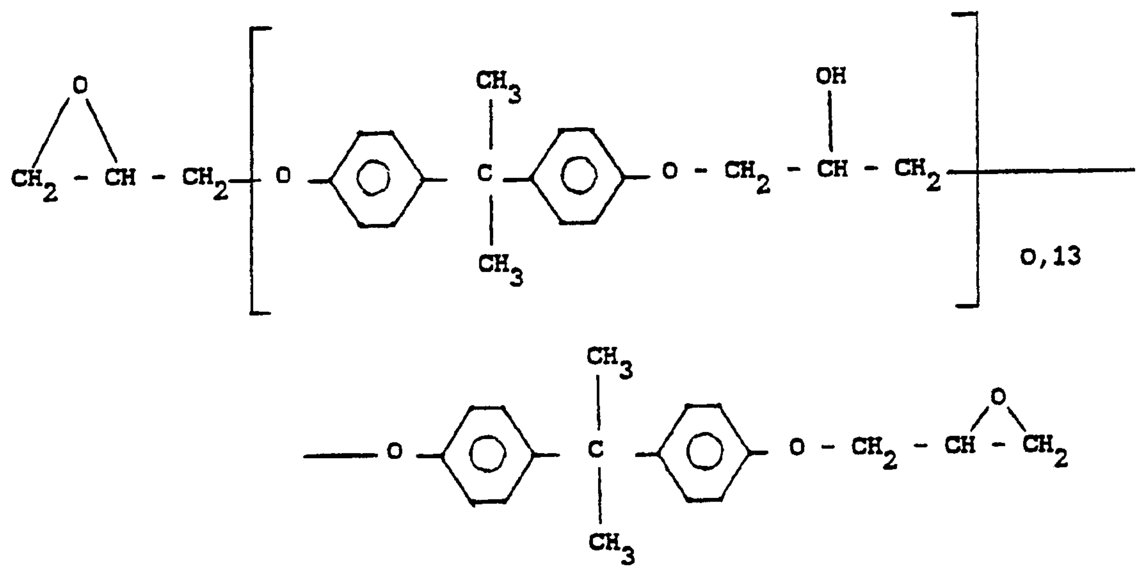

Le dosage des réactifs est tel que la résine époxy représente 25% du poids du mélange bis-maléimide + diamine + résine époxy.

Le temps de séjour moyen de la matière dans le malaxeur est de l'ordre de 5 minutes. A la sortie de l'appareil on recueille une composition thermodurcissable dont le point de ramollissement est de 65°C. Cette composition est avancée par chauffage au four à 165°C jusqu'à l'obtention d'un point de ramolissement de 90°C.

La composition thermodurcissable ainsi obtenue est soluble dans des solvants polaires comme par exemple la N-méthylpyrrolidone et le diméthylformamide ; sa viscosité, mesurée en solution à 50% en poids dans la N-méthylpyrrolidone, et de 0,5 Pa.s.

On utilise une solution de cette composition à 50% en poids dans la N-méthylpyrrolidone pour enduire un tissu de verre fabriqué par la Société PORCHER sous la référence 7628 dont de grammage est de 200 $g/m^2$ et ayant subi un traitement par du gamma-aminopropyltriéthoxysilane (silane A 1100 d'UNION CARBIDE). Le tissu imprégné contient 40 g de composition thermodurcissable pour 60 g de tissu ; on le sèche en atmosphère ventilée à 140°C pendant 10 minutes. La teneur en diamine résiduelle mesurée sur le tissu imprégné est inférieure à 0,1% en poids (pourcentage de diamine libre par rapport au poids de l'ensemble tissu + composition thermodurcissable d'imprégnation) alors qu'elle est égale environ à 1% en poids dans le cas où la composition thermodurcissable est préparée comme indiqué ci-avant, mais en absence de résine époxy. On découpe ensuite 12 carrés (15 × 15 cm) que l'on empile et on place l'ensemble entre les plateaux d'une presse préchauffés à 130°C. On applique alors une pression de $40.10^5$ Pa, puis sous cette même pression on élève la température à 180°C en 20 minutes ; l'ensemble est maintenu dans ces conditions de température et de pression pendant une heure. Ensuite on démoule à chaud, et on fait subir à l'ensemble une post-cuisson à 235°C pendant 4 heures.

Le stratifié obtenu présente une résistance interlamellaire (mesurée selon la norme ASTM D 2345-65 T) de 65 MPa. Dans les mêmes conditions, un stratifié réalisé à partir d'une composition thermodurcissable préparée comme indiqué ci-avant, mais en absence de résine époxy, présente une résistance interlamellaire de 50 MPa.

Pour déterminer l'adhérence du cuivre sur un stratifié, on découpe encore 6 carrés de tissu imprégné (15 × 15 cm) que l'on empile avec une feuille de cuivre de 35 micromètres d'épaisseur placée sur l'une des faces extérieures de l'empilement et on place l'ensemble entre les plateaux d'une presse dans les conditions décrites

ci-avant. Après l'étape de post-cuisson (4 heures à 235°C), on examine l'adhérence du cuivre sur le stratifié à 6 plis préparé : cette adhérence, mesurée au dynamomètre par traction du cuivre à 90°C d'angle (selon la norme MIL P 55 617 B) avec une vitesse de traction de 55 mm/min, est de l'odre de 18 N/cm ; cette valeur se maintient après un vieillissement de 100 heures à 200°C.

EXEMPLE 2

On prépare dans les mêmes conditions que celles décrites à l'exemple 1, une composition thermodurcissable contenant 25% en poids d'une résine époxy bromée. Cette résine résulte de la condensation de bisphénol A tétrabromé et d'épichlorhydrine. Elle possède un taux de brome de 20% en poids et un poids d'équivalent époxy de 220. Elle est disponible dans le commerce sous la marque déposée ARALDITE de la Société CIBA, type LY 8047. La quantité de brome apportée par la résine époxy, exprimée par le pourcentage en poids de brome élémentaire par rapport au poids de la composition globale bis-imide + diamine + résine époxy, est égale à 5%.

La composition thermodurcissable obtenue à la sortie du malaxeur a un point de ramollissement de 70°C. Cette composition est avancée par chauffage au four à 165°C jusqu'à l'obtention d'un point de ramollissement de 110°C.

Une première partie de la composition obtenue est ensuite mise dans un moule cylindrique qui est placé entre les plateaux d'une presse préalablement chauffés à 240°C. On applique une pression de $200.10^5$ Pa et sous cette même pression on maintient la température de 240°C pendant 1 heure. Après démoulage, on opère une post-cuisson à 200°C pendant 12 heures. On mesure ensuite les propriétés mécaniques suivantes.

- résistance en flexion à 25°C (selon la norme I50 178) : 120 MPa,
- résistance au choc Charpy non entaillé (selon la norme I50 179) : 8,5 $kJ/m^2$

Dans les mêmes conditions, le produits moulé réalisé à partir d'une composition thermodurcissable préparée comme indiqué ci-avant, mais en absence de résine époxy, présente une résistance au choc Charpy non entaillé de 6 $kJ/m^2$.

Avec une seconde partie de la composition thermodurcissable obtenue précédemment, on prépare des préimprégnés et des stratifiés comportant 6 plis (6 couches de préimprégnés) dans les conditions décrites ci-avant à l'exemple 1 (à noter qu'aucune feuille de cuivre n'est utilisé ici). Après une post-cuisson à 235°C pendant 4 heures, on effectue des mesures de combustibilité à l'aide du test UL 94 vertical (épaisseur des éprouvettes à base de stratifié : 0,8 mm ; le temps de combustion est donné en seconde après conditionnement de 48 heures, à 23°C et sous 50% d'humidité relative ; le classement est établi sur la moyenne de 10 résultats: 5 éprouvettes et 2 tests sur chaque éprouvette) :

- temps de combustion : 3s,
- classement : VO.

Avec la troisième et dernière partie de la composition thermodurcissable obtenue, on prépare des préimprégnés et des stratifiés cuivrés comportant 6 plis et une feuille de cuivre de 35 micromètres d'épaisseur en opérant là encore comme indiqué ci-avant à l'exemple 1 in fine. Après l'étape de post-cuisson (4 heures à 235°C), on examine l'adhérence du cuivre sur le stratifié cuivré à 6 plis dans les conditions décrites ci-avant à l'exemple 1 :

- adhérence intitiale : 13 N/cm,
- adhérence après 100 heures à 200°C : 9 N/cm,
- adhérence après 5 minutes de passage au test dit du bain de soudure à 285°C : 0,5 N/cm (ce test consiste à tremper l'éprouvette à base de stratifié cuivré dans un bain d'étain porté à 285°C).

A titre comparatif, on a reproduit l'exemple 2 précédent mais en utilisant cette fois 35% en pois de la résine époxy bromée ARALDITE, LY 8047 ; dans ces conditions la quantité de brome apportée par la résine époxy, exprimée par le pourcentage en poids de brome élémentaire par rapport au poids de la composition globale bis-imide + diamine + résine époxy, est égale à 7%.

Avec la composition thermodurcissable obtenue, on prépare à nouveau selon la méthode déjà décrite des préimprégnés et des stratifiés cuivrés comportant 6 plis et une feuille de cuivre de 35 micromètres d'épaisseur. De manière habituelle, on effectue ensuite la post-cuisson à 235°C pendant 4 heures. On observe alors, à l'issue de cette post-cuisson, un phénomène de "cloquage" (développement de cloques) sur la face cuivrée des stratifiés ; cela indique une perte complète d'adhérence du cuivre en plusieurs point de la surface des stratifiés, ce qui constitue un défaut rédhibitoire pour les applications possibles des stratifiés cuivrés.

EXEMPLE 3

On prépare dans les mêmes conditions que celles décrites à l'exemple 2, une composition thermodurcissable contenant 25% en poids d'un mélange à base de la résine époxy de l'exemple 1 (ARALDITE, LY 556 ; 40% en poids dans le mélange) et de la résine époxy bromée de l'exemple 2 (ARALDITE, LY 8047 ; 60% en poids dans le mélange). Dans ces conditions la quantité de brome apportée par le mélange de résines époxy, exprimée par le pourcentage en poids de brome élémentaire par rapport au poids de la composition globale bis-imide + diamine + résines époxy, est égale à 3%.

La composition thermodurcissable obtenue à la sortie du malaxeur est avancée par chauffage au four à 165°C jusqu'à l'obtention d'un point de ramolissement de 110°C.

Avec cette composition, on prépare des préimprégnés et des stratifiés cuivrés comportant 6 plis et une feuille de cuivre de 35 micromètres d'épaisseur en opérant selon le mode opératoire habituel. Après l'étape de post-cuisson (4 heures à 235°C), on examine l'adhérence du cuivre sur le stratifié dans les conditions décrites ci-avant à l'exemple 1 :

- adhérence initiale : 14,7 N/cm,
- adhérence après 100 heures à 200°C : cette valeur se maintient à 14,7 N/cm,
- adhérence après 10 minutes de passage au test du bain de soudure à 285°C : 12,7 N/cm.

## Revendications

### Revendications pour les Etats Contractants : AT, BE, CH, DE, FR, GB, IT, LI, LU, NL SE

1. Compositions thermodurcissables caractérisées en ce qu'elles comprennent le produit de réaction entre 90°C et 200°C d'un N,N'-bis-imide, d'une diamine biprimaire et d'une résine époxy, ladite réaction étant définie par les points suivant :

(a) le N,N'-bis-imide est un produit de formule :

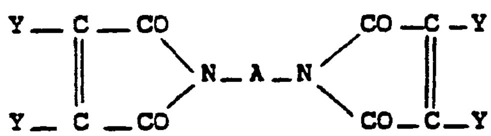

(I)

dans laquelle :

- le symbole Y représente H, $CH_3$ ou Cl
- le symbole A représente un radical divalent choisi dans le groupe constitué par les radicaux : cyclohexylènes ; phénylènes ; méthyl-4 phénylène-1,3 ; méthyl-2 phénylène-1,3 ; méthyl-5 phénylène-1,3 ; diéthyl-2,5 méthyl-3 phénylène-1,4 ; et les radicaux de formule :

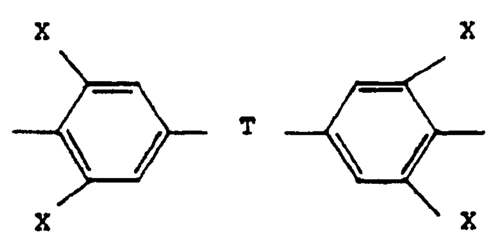

dans laquelle T représente un lien valentiel simple ou un groupement :

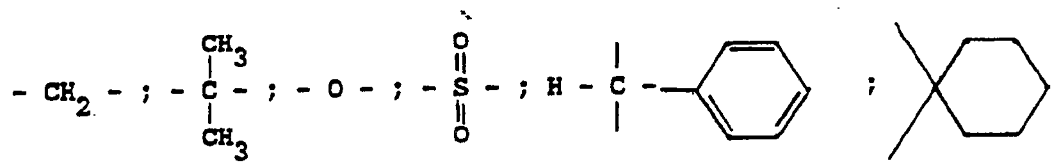

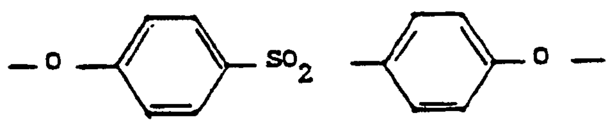

et les symboles X identiques ou différents représentent chacun un atome d'hydrogène, un radical méthyle, éthyle ou isopropyle ;

(b) la diamine biprimaire est un produit de formule :

$$H_2N\text{-}B\text{-}NH_2 \quad (II)$$

dans laquelle le symbole B représente l'un des radicaux divalent que représente le symbole A, les symboles A et B contenus dans un même polymère pouvant être identiques ou différents entre eux ;

(c) la résine époxy possède un poids d'équivalent époxy compris entre 100 et 500 et elle consiste dans un éther glycidique obtenu en faisant réagir avec de l'épichlorhydrine un phénol divalent choisi dans le groupe formé par :

le bis (hydroxy-4 phényl)-2,2 propane, le bis(hydroxy-4 phényl) méthane, le bis(hydroxy-4 phényl) méthyl-phényl-méthane, les bis(hydroxy-4 phényl)tolyl-méthanes, le résorcinol, l'hydroquinone, le pyrocatéchol, le dihydroxy-4,4' diphényle ; les produits de condensation des phénols précités avec un aldéhyde ; et les dérivés chlorés ou bromés sur les noyaux aromatiques issus des phénols précités ;

(d) la quantité de N,N'-bis-imide de formule (I) et de diamine de formule (II) est choisie de façon à ce que le rapport :

$$\frac{\text{nombre de moles de bis-amide}}{\text{nombre de mole de diamine}}$$

se situe dans l'intervalle allant de 1,2/1 à 20/1 ; la quantité de résine époxy représente 10% à 40% du poids du mélange global bis-imide+diamine+résine époxy ; et, dans le cas où l'on fait appel à une résine époxy chlorée ou bromée, la quantité de chlore ou de brome apportée par la résine époxy, exprimée par le pourcentage en poids de chlore élémentaire ou de brome élémentaire par rapport au poids du mélange global bis-imide + diamine + résine époxy, représente au plus 6% ;

(e) la mise en oeuvre de la réaction est réalisée selon un procédé de préparation en continu consistant à introduire isolément le N,N'-bis-imide de formule (I) à l'état solide divisé, la diamine de formule (II) à l'état fondu et la résine époxy à l'état liquide dans un malaxeur à vis extrudeuse.

2. Compositions selon la revendication 1, caractérisées en ce que l'on utilise un malaxeur comportant une vis sans fin à filetage interrompu effectuant simultanément un mouvement de rotation et un mouvement oscillatoire dans la direction de l'axe, logée dans une enveloppe comportant des dents qui coopèrent avec les ailettes interrompues de la vis.

3. Compositions selon l'une quelconque des revendications 1 et 2, caractérisées en ce que la diamine (b) et la résine époxy (c) sont alimentées en aval de la zone d'alimentation du bis-imide (a).

4. Compositions selon l'une quelconque des revendication 1 à 3, caractérisées en ce que, lorsque l'on met en oeuvre une résine époxy chlorée ou bromée, cette dernière étant prise seule ou en mélange avec une résine époxy non chlorée ou non bromée, la quantité de chlore ou de brome apportée par la résine époxy ou le mélange de résines époxy engagé, exprimée par le pourcentage en poids de chlore élémentaire ou de brome élémentaire par rapport au poids du mélange global bis-imide + diamine + résine(s) époxy, se situe dans l'intervalle allant de 2 à 4%.

5. Applications des compositions selon l'une quelconque des revendications 1 à 4 à la préparation de résines durcies par chauffage desdites compositions à une température comprise entre 160°C et 280°C.

**Revendications pour l'Etat contractant suivant : ES.**

1. Procédé de préparation de compositions thermodurcissables, caractérisé en ce qu'il consiste à introduire en continu et isolément un N,N'-bis-imide (a) à l'état solide, une diamine biprimaire (b) à l'état fondu et une résine époxy (c) à l'état liquide dans un malaxeur à vis extrudeuse dont la température de la zone de malaxage est comprise entre 90°C et 200°C, les réactifs précités ayant les définitions suivantes :

– le N,N'-bis-imide (a) est un produit de formule :

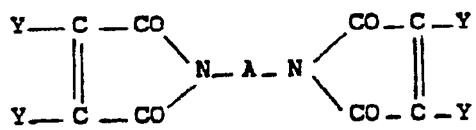

(I)

dans laquelle :

- le symbole Y représente H, $CH_3$ ou Cl
- le symbole A représente un radical divalent choisi dans le groupe constitué par les radicaux : cyclohexylènes ; phénylènes ; méthyl-4 phénylène-1,3 ; méthyl-2 phénylène-1,3 ; méthyl-5 phénylène-1,3 ; diéthyl-2,5 méthyl-3 phénylène-1,4 ; et les radicaux de formule :

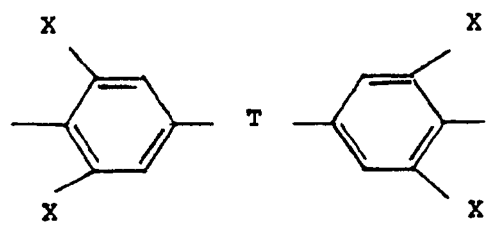

dans laquelle T représente un lien valentiel simple ou un groupement :

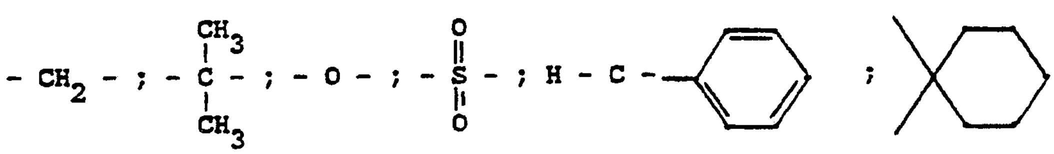

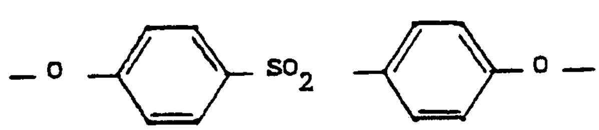

et les symboles X identiques ou différents représentent chacun un atome d'hydrogène, un radical méthyle, éthyle ou isopropyle ;

– la diamine biprimaire (b) est un produit de formule :

$$H_2N\text{-}B\text{-}NH_2 \quad (II)$$

dans laquelle le symbole B représente l'un des radicaux divalent que représente le symbole A, les symboles A et B contenus dans un même polymère pouvant être identiques ou différents entre eux ;

– la résine époxy (c) possède un poids d'équivalent époxy compris entre 100 et 500 et elle consiste dans un éther glycidique obtenu en faisant réagir avec de l'épichlorhydrine un phénol divalent choisi dans le groupe formé par :

le bis (hydroxy-4 phényl)-2,2 propane, le bis(hydroxy-4 phényl) méthane, le bis(hydroxy-4 phényl) méthyl-phényl-méthane, les bis(hydroxy-4 phényl)tolyl-méthanes, le résorcinol, l'hydroquinone, le pyrocatéchol, le dihydroxy-4,4' diphényle ; les produits de condensation des phénols précités avec un aldéhyde ; et les dérivés chlorés ou bromés sur les noyaux aromatiques issus des phénols précités ;

– la quantité de N,N'-bis-imide de formule (I) et de diamine de formule (II) est choisie de façon à ce que le rapport :

$$\frac{\text{nombre de moles de bis–amidé}}{\text{nombre de mole de diamine}}$$

se situe dans l'intervalle allant de 1,2/1 à 20/1 ; la quantité de résine époxy représente 10% à 40% du poids du mélange global bis-imide + diamine + résine époxy ; et, dans le cas où l'on fait appel à une résine époxy chlorée ou bromée, la quantité de chlore ou de brome apportée par la résine époxy, exprimée par le pourcentage en poids de chlore élémentaire ou de brome élémentaire par rapport au poids du mélange global bis-imide+diamine+résine époxy, représente au plus 6%.

2. Procédé selon la revendication 1, caractérisées en ce que l'on utilise un malaxeur comportant une vis sans fin à filetage interrompu effectuant simultanément un mouvement de rotation et un mouvement oscillatoire dans la direction de l'axe, logée dans une enveloppe comportant des dents qui coopèrent avec les ailettes interrompues de la vis.

3. Procédé selon l'une quelconque des revendications 1 et 2, caractérisées en ce que la diamine (b) et la résine époxy (c) sont alimentées en aval de la zone d'alimentation du bis-imide (a).

4. Procédé selon l'une quelconque des revendications 1 à 3, caractérisées en ce que, lorsque l'on met en oeuvre une résine époxy chlorée ou bromée, cette dernière étant prise seule ou en mélange avec une résine époxy non chlorée ou non bromée, la quantité de chlore ou de brome apportée par la résine époxy ou le mélange de résines époxy engagé, exprimée par le pourcentage en poids de chlore élémentaire ou de brome élémentaire par rapport au poids du mélange global bis-imide + diamine + résine(s) époxy, se situe dans l'intervalle allant de 2 à 4%.

5. Applications des compositions préparées selon l'une quelconque des revendications 1 à 4 à la fabrication de résines durcies par chauffage desdites compositions à une température comprise entre 160°C et 280°C.

## Claims

### Claims for the Contracting States : AT, BE, CH, DE, FR, GB, IT, LI, LU, NL, SE

1. Thermosetting compositions, characterised in that they comprise the product of reaction, at a temperature between 90°C and 200°C, between an N,N'-bisimide, a diprimary diamine and an epoxy resin, the said reaction being defined by the following points :

(a) the N,N'-bisimide is a product of formula :

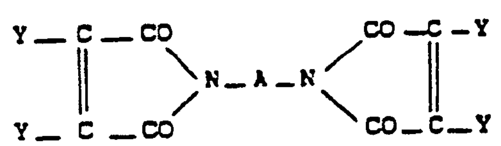

(I)

in which :

the symbol Y denotes H, $CH_3$ or Cl

the symbol A denotes a divalent radical chosen from the group consisting of the following radicals : cyclohexylene, phenylene, 4-methyl-1,3-phenylene, 2-methyl-1,3-phenylene, 5-methyl-1,3-phenylene, 2,5-diethyl-3-methyl-1,4-phenylene, and the radicals of formula :

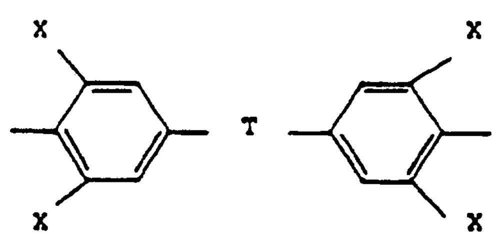

in which T denotes a single valency bond or a group :

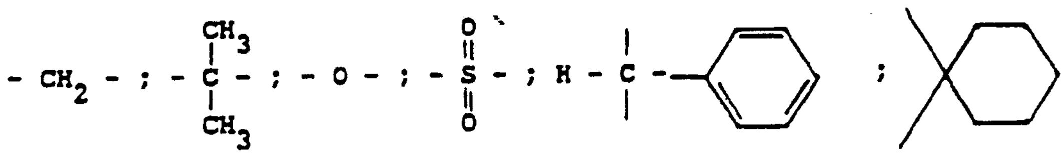

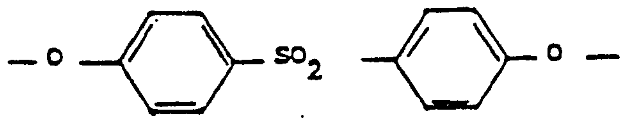

and the symbols X, which are identical or different, each denote a hydrogen atom or a methyl, ethyl or isopropyl radical,
(b) the diprimary diamine is a product of formula :

$$H_2N\text{-}B\text{-}NH_2 \quad (II)$$

in which the symbol B denotes one of the divalent radicals which are denoted by the symbol A, it being possible for the symbols A and B present in the same polymer to be identical to or different from each other,
(c) the epoxy resin has an epoxy equivalent weight of between 100 and 500, and it consists of a glycidyl ether obtained by reacting with epichlorohydrin a divalent phenol chosen from the group consisting of : 2,2-bis(4-hydroxyphenyl)propane, bis(4-hydroxyphenyl)methane, bis(4-hydroxyphenyl)methylphenylmethane, bis(4-hydroxyphenyl)tolylmethanes, resorcinol, hydroquinone, pyrocatechol, 4,4′-dihydroxydiphenyl, the products of condensation of the abovementioned phenols with an aldehyde, and the derivatives which are chlorinated or brominated on the aromatic nuclei originating from the abovementioned phenols,
(d) the quantity of N,N′-bisimide of formula (I) and of diamine of formula (II) is chosen so that the ratio :

$$\frac{\text{number of moles of bisimide}}{\text{number of moles of diamine}}$$

lies in the range from 1.2/1 to 20/1 ; the quantity of epoxy resin represents 10% to 40% of the weight of the combined mixture of bisimide + diamine + epoxy resin ; and, in the case where a chlorinated or brominated epoxy resin is used, the quantity of chlorine or of bromine contributed by the epoxy resin, expressed as the weight percentage of elemental chlorine or of elemental bromine relative to the weight of the combined mixture of bisimide + diamine + epoxy resin, represents not more than 6%,
(e) the use of the reaction is performed according to a continuous preparation process consisting in separately introducing the N,N′-bisimide of formula (I) in a divided solid state, the diamine of formula (II) in the molten state and the epoxy resin in the liquid state into a mixer with an extruder screw.

2. Compositions according to Claim 1, characterised in that a mixer comprising an endless screw with interrupted flights simultaneously performing a rotary motion and an oscillating motion in the axial direction and housed in a barrel comprising teeth which interact with the interrupted fins of the screw, is employed.

3. Compositions according to either of Claims 1 and 2, characterised in that the diamine (b) and the epoxy resin (c) are fed downstream of the bisimide (a) feed zone.

4. Compositions according to any one of Claims 1 to 3, characterised in that, when a chlorinated or brominated epoxy resin is employed, the latter being taken by itself or mixed with an unchlorinated or unbrominated epoxy resin, the quantity of chlorine or of bromine contributed by the epoxy resin or the mixture of epoxy resins employed, expressed as the weight percentage of elemental chlorine or of elemental bromine relative to the weight of the combined mixture of bisimide + diamine + epoxy resin(s), lies in the range from 2 to 4%.

5. Applications of the compositions according to any one of Claims 1 to 4, to the preparation of resins cured by heating the said compositions at a temperature of between 160°C and 280°C.

**Claims for the Contracting State : ES**

1. Process for the preparation of thermosetting compositions, characterised in that it consists in introducing continuously and separately, an N,N′-bisimide (a) in the solid state, a diprimary diamine (b) in the molten state and an epoxy resin (c) in the liquid state into a mixer with an extruder screw, in which the temperature in the

mixing zone is between 90°C and 200°C, the abovementioned reactants being defined by the following points:

– the N,N'-bisimide (a) is a product of formula :

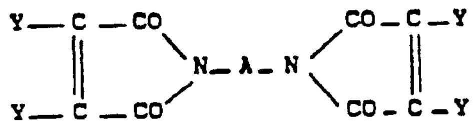

(I)

in which :

the symbol Y denotes H, $CH_3$ or Cl

the symbol A denotes a divalent radical chosen from the group consisting of the following radicals : cyclohexylene, phenylene, 4-methyl-1,3-phenylene, 2-methyl-1,3-phenylene, 5-methyl-1,3-phenylene, 2,5-diethyl-3-methyl-1,4-phenylene, and the radicals of formula :

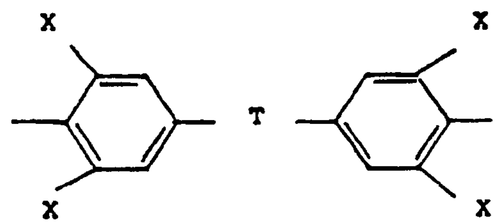

in which T denotes a single valency bond or a group :

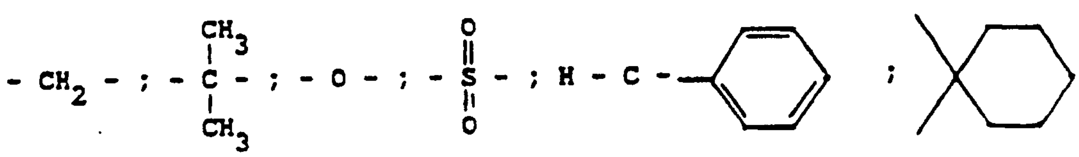

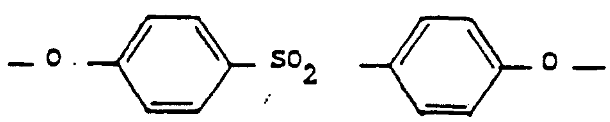

and the symbols X, which are identical or different, each denote a hydrogen atom or a methyl, ethyl or isopropyl radical,

– the diprimary diamine (b) is a product of formula :

$$H_2N\text{-}B\text{-}NH_2 \quad (II)$$

in which the symbol B denotes one of the divalent radicals which are denoted by the symbol A, it being possible for the symbols A and B present in the same polymer to be identical to or different from each other,

– the epoxy resin (c) has an epoxy equivalent weight of between 100 and 500, and it consists of a glycidyl ether obtained by reacting with epichlorohydrin a divalent phenol chosen from the group consisting of : 2,2-bis(4-hydroxyphenyl)propane, bis(4-hydroxyphenyl)methane, bis(4-hydroxyphenyl)methylphenylmethane, bis(4-hydroxyphenyl)tolylmethanes, resorcinol, hydroquinone, pyrocatechol, 4,4'-dihydroxydiphenyl, the products of condensation of the abovementioned phenols with an aldehyde, and the derivatives which are chlorinated or brominated on the aromatic nuclei originating from the abovementioned phenols,

– the quantity of N,N'-bisimide of formula (I) and of diamine of formula (II) is chosen so that the ratio :

$$\frac{\text{number of moles of bisimide}}{\text{number of moles of diamine}}$$

lies in the range from 1.2/1 to 20/1 ; the quantity of epoxy resin represents 10% to 40% of the weight of

the combined mixture of bisimide + diamine + epoxy resin ; and, in the case where a chlorinated or brominated epoxy resin is used, the quantity of chlorine or of bromine contributed by the epoxy resin, expressed as the weight percentage of elemental chlorine or of elemental bromine relative to the weight of the combined mixture of bisimide + diamine + epoxy resin, represents not more than 6%.

2. Process according to Claim 1, characterised in that a mixer comprising an endless screw with interrupted flights simultaneously performing a rotary motion and an oscillating motion in the axial direction and housed in a barrel comprising teeth which interact with the interrupted fins of the screw, is employed.

3. Process according to either of Claims 1 and 2, characterised in that the diamine (b) and the epoxy resin (c) are fed downstream of the bisimide (a) feed zone.

4. Process according to any one of Claims 1 to 3, characterised in that, when a chlorinated or brominated epoxy resin is employed, the latter being taken by itself or mixed with an unchlorinated or unbrominated epoxy resin, the quantity of chlorine or of bromine contributed by the epoxy resin or the mixture of epoxy resins employed, expressed as the weight percentage of elemental chlorine or of elemental bromine relative to the weight of the combined mixture of bisimide + diamine + epoxy resin(s), lies in the range from 2 to 4%.

5. Applications of the compositions prepared according to any one of Claims 1 to 4, to the manufacture of resins cured by heating the said compositions at a temperature of between 160°C and 280°C.

## Ansprüche

### Patentansprüche für die Vertragsstaaten : AT, BE, CH, DE, FR, GB, IT, LI, LU, NL, SE

1. wärmehärtbare Zusammensetzungen, dadurch gekennzeichnet, daß sie das Produkt der Reaktion, durchgeführt zwischen 90°C und 200°C eines N,N'-Bisimids, eines biprimären Diamins und eines Epoxyharzes umfassen, wobei diese Reaktion durch die folgenden Punkte definiert ist :

(a) das N,N'-Bisimid ist ein Produkt der Formel

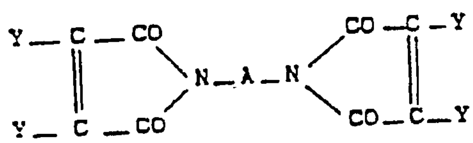

(I)

worin

- das Symbol Y bedeutet : H, $CH_3$ oder Cl
- das Symbol A bedeutet einen zweiwertigen Rest, ausgewählt aus der Gruppe bestehend aus den Resten : Cyclohexylen, Phenylen, 4-Methyl-1,3-phenylen, 2-Methyl-1,3-phenylen, 5-Methyl-1,3-phenylen, 2,5-Diethyl-3-methyl-1,4-phenylen, und den Resten der Formel :

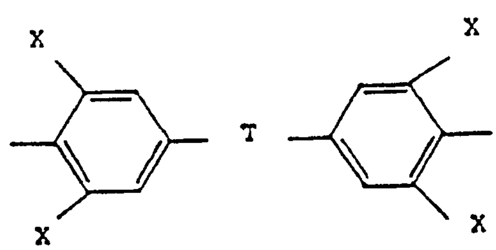

worin T eine einfache Valenzbindung bedeutet oder eine Gruppe :

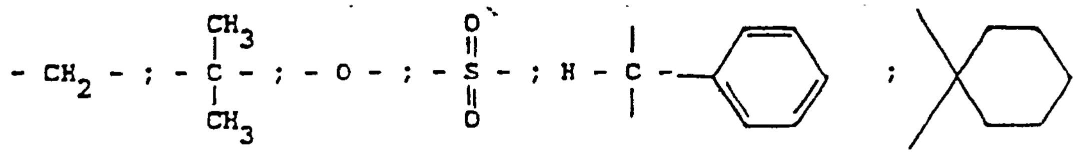

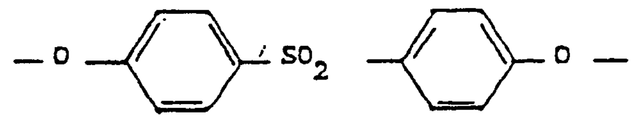

und die Symbole X, die identisch oder verschieden sind, bedeuten jeweils ein Wasserstoffatom, einen Methyl-, Ethyl- oder Isopropylrest ;

(b) das biprimäre Diamin ist ein Produkt der Formel :

$$H_2N\text{-}B\text{-}NH_2 \quad (II)$$

worin das Symbol B einer der zweiwertigen Reste ist, die das symbol A bedeuten, wobei die Symbole A und B, die im selben Polymeren enthalten sind, identisch oder untereinander verschieden sein können ;

(c) das Epoxyharz besitzt ein Epoxyäquivalentgewicht zwischen 100 und 500 und besteht aus einem Glycidether, der erhalten ist, indem ein zweiwertiges Phenol ausgewählt aus der gruppe gebildet durch : 2,2-Bis-(4-hydroxyphenyli-propan, Bis-(4-hydroxyphenyl)-methan, Bis-(4-hydroxyphenyl)-methylphenylmethan, den Bis-(4-hydroxyphenyl)-tolylmethanen, Resorcin, Hydrochinon, Brenzkatechin, 4,4'-Dihydrohydiphenyl, den Kondensations-produkten der vorerwähnten Phenole mit einem Aldehyd und den an den aromatischen Ringen chlorierten oder bromierten Derivaten aus den vorerwähnten Phenolen ; mit Epichlorhydrin zur Reaktion gebracht wurde ;

(d) die Menge N,N'-Bisimid der Formel (I) und Diamin der Formel (II) ist derart gewählt, daß das Verhältnis:

$$\frac{\text{Anzahl der Mole Bisimid}}{\text{Anzahl der Mole Diamin}}$$

in dem Bereich von 1,2/1 is 20/1 liegt ; die Menge an Epoxyharz beträgt 10% bis 40% des Gewichtes des Gesamtgemisches Bisimid + Diamin +Epoxyharz ; und im Falle, daß ein chloriertes oder bromiertes Epoxyharz verwendet wird, beträgt die durch das Epoxyharz eingebrachte Chlor- oder Brommenge, ausgedrückt in Gewichtsprozent an elementarem Chlor oder elementarem Brom, in bezug auf das Gewicht des Gesamtgemisches Bisimid + Diamin + Epoxyharz höchstens 6% ;

(e) die Durchführung der Reaktion erfolgt nach einem kontinuierlichen Herstellungsverfahren, das darin besteht, daß das N,N'-Bisimid der Formel (I) in zerteiltem festen Zustand, das Diamin der Formel (II) in geschmolzenem Zustand, und das Epoxyharz in flüssigem Zustand, getrennt in einen Extruderschneckenkneter eingebracht wird.

2. Zusammensetzungen gemäß Anspruch 1, dadurch gekennzeichnet, daß man einen Kneter verwendet, der eine endlose, stufenweise gesetzte Schnecke enthält, die gleichzeitig eine Drehbewegung und eine Schwingungsbewegung in Richtung der Achse durchführt und die in einem Gehäuse gelagert ist, das Zähne trägt, die mit den unterbrochenen Flügeln der Schnecke zusammenarbeiten.

3. Zusammensetzungen gemäß einem der Ansprüche 1 und 2, dadurch gekennzeichniet, daß das Diamin (b) und das Epoxyharz (c) stromabwärts der Einspeisungszone des Bisimids (a) eingespeist werden.

4. Zusammensetzungen gemäß einem der Ansprüche 1 bis 3, dadurch gekenneichnet, daß falls man ein chloriertes oder bromiertes Epoxyharz einsetzt, das letztere allein oder in Mischung mit einem nicht-chlorierten oder nicht-bromierten Epoxyharz eingesetzt wird, und die durch das eingesetzte Epoxyharz oder das Gemisch der Epoxyharze eingebrachte Chlor- oder Brommenge, ausgedrückt in Gewichtsprozent elementares Chlor oder elementares Brom, in bezug auf das Gewicht des Gesamtgemisches Bisimid + Diamin + Epoxyharz(e) in dem Bereich von 2 bis 4% liegt.

5. Anwendung der Zusammensetzungen gemäß einem der Ansprüche 1 bis 4 zur Herstellung von Harzen, die durch Erhitzen dieser Zusammensetzungen auf eine Temperatur zwischen 160°C und 280°C gehärtet sind.

**Patentansprüche für den Vertragsstaat : ES**

1. Verfahren zur Herstellung von wärmehärtbaren Zusammensetzungen, dadurch gekennzeichnet, daß es darin besteht, kontinuierlich und getrennt ein N,N'-Bisimid (a) in festem Zustand, ein biprimäres Diamin (b) in geschmolzenem Zustand und ein Epoxyharz (c) in flüssigem Zustand in einen Extruderschneckenkneter einzubringen, dessen Temperatur der Knetzone zwischen 90°C und 200°C beträgt und die vorstehend erwähnten Reaktionsteilnehmer die folgenden Definitionen haben :

– des N,N'-Bisimid (a) ist ein Produkt der Formel (I)

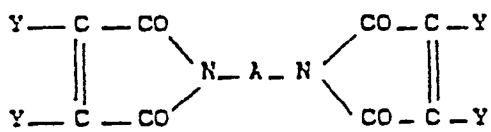

(I)

worin

- das Symbol Y bedeutet : H, $CH_3$ oder Cl
- das Symbol A bedeutet einen zweiwertigen Rest, ausgewählt aus der Gruppe bestehend aus den Resten Cyclohexylen, Phenylen, 4-Methyl-1,3-phenylen, 2-Methyl-1,3-phenylen, 5-Methyl-1,3-phenylen, 2,5-Diethyl-3-methyl-1,4-phenylen und der Resten der Formel

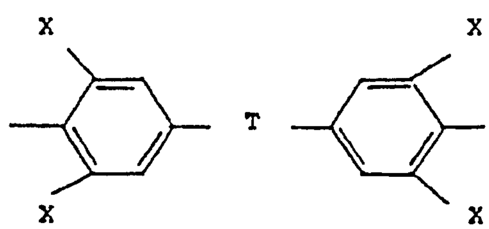

worin T eine einfache Valenzbindung bedeutet oder eine Gruppe

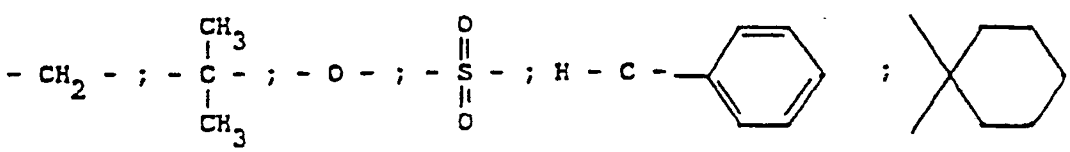

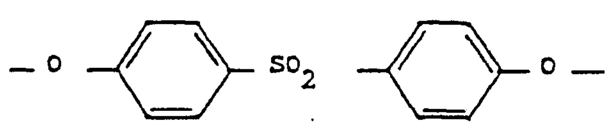

und die Symbole X, die identisch oder verschieden sind, bedeuten jeweils ein Wasserstoffatom, einen Methul-, Ethyl- oder Isopropylrest ;

– das biprimäre Diamin (b) ist ein Produkt der Formel :

$$H_2N\text{-}B\text{-}NH_2 \quad (II)$$

worin das Symbol B einen der zweiwertigen Reste bedeutet, den das Symbol A bedeutet, und die Symbole A und B, die im selben Polymer enthalten sind, identisch oder untereinander versachieben sein können ;

– das Epoxybarz (c) besitzt ein Epoxyäquivalentgewicht zwischen 100 und 500 und besteht aus einem Glycidether, der erhalten wurde, indem ein zweiwertiges Phenol ausgewählt aus der Gruppe gebildet aus : 2,2-bis-(4-hydrowyphenyl)-propan, Bis-(4-hyroxyphenyl)-methan, Bis-(4-hydroxyphenyl)-methylphenylmethan, den Bis-(4-hydroxyphenyl)-tolylmethanen, Resorcin, Hydrochinon, Brenzkatechin, 4,4'-Dihydroxydiphenyl, den Kondensationsprodukten der erwähnten Phenole mit einem Aläehyd und den an den aromatischen Ringen chlorierten oder bromierten Derivaten aus den vorerwähnten Phenolen, mit Epichlorhydrin zur Reaktion gebracht wurde ;
– die Menge an N,N'-Bisimid der Formel (I) und Diamin der Formel (II) ist in der Weise ausgewäblt, daß das Verhältnis

$$\frac{\text{Anzahl der Mole Bisimid}}{\text{Anzahl der Mole Diamin}}$$

in dem Bereich von 1,2/1 bis 20/1 liegt ; die Menge an Epoxyharz bedeutet 10% bis 40% des Gewichts des Gesamtgemisches Bisimid + Diamin + Epoxyharz ; und im Falle, daß ein chloriertes oder bromiertes Epoxyharz verwendet wird, beträgt die durch dis Epoxyharz eingebrachte Chor- oder Brommenge, ausgedrückt in Gewichtsprozent elementares Chlor oder elementares Brom, in bezug auf das Gewicht des Gesamtgemisches Bisimid + Diamin + Epoxyharz höchstens 6%.

2. Verfahren gemäß Anspruch 1, dadurch gekennzeichnet, daß man einen Kneter verwendet, der eine endlose, stufenweise gesetzte Schnecke enthält, die gleichzeitig eine Drehbewegung und eine Schwingungsbewegung in Richtung der Achse durchführt und die in einem Gehäuse gelagert ist, das Zähne trägt, die mit den unterbrochenen Flügeln der Schnecke zusammenarbeiten.

3. Verfahren gemäß einem der Ansprüche 1 und 2, dadurch gekennzeichnet, daß das Diamin (b) und das Epoxyharz (c) stromabwärts der Einspeisungszone des Bisimids (a) eingespeist werden.

4. Verfahren gemäß einem der Ansprüche 1 bis 3, dadurch gekennzeichnet, daß falls man ein chloriertes oder bromiertes Epoxyharz einsetzt, das letztere allein oder in Mischung mit einem nicht-chlorierten oder nicht-bromierten Epoxyharz eingesetzt wird, und die durch das eingesetzte Epoxyharz oder das Gemisch der Epoxyharze eingebrachte Chlor- oder Brammenge, ausgedrückt in Gewichtsprozent elementares Chlor oder elementares Brom, in bezug auf das Gewicht des Gesamtgemisches Bisimid + Diamin + Epoxyharz(e) in dem Bereich von 2 bis 4% liegt.

5. Anwendung der Zusammensetzungen gemäß einem der Ansprüche 1 bis 4 zur Herstellung von Harzen, die durch Erhitzen dieser Zusammensetzungen auf eine Temperatur zwischen 160°C und 280°C gehärtet sind.